# EUROPÄISCHE PATENTSCHRIFT

(11) **EP 0 676 553 B1**
(45) Veröffentlichungstag und Bekanntmachung des Hinweises auf die Patenterteilung: **31.05.2000**
(21) Anmeldenummer: 95102046.0
(22) Anmeldetag: 15.02.1995
(51) Int. Cl.: F16C 29/06

(54) **Linearwälzlager**
Linear rolling bearing
Palier linéaire à roulement

(30) Priorität: 08.04.1994 DE 4412131
(43) Veröffentlichungstag der Anmeldung: 11.10.1995
(73) Patentinhaber: INA Wälzlager Schaeffler oHG, 91072 Herzogenaurach (DE)
(72) Erfinder: Friedrich, Horst, D-66909 Herschweiler-Pettersheim (DE); Wiemer, Matthias, Dr.-Ing., D-66894 Käshofen (DE)

(56) Entgegenhaltungen:
- EP-A- 0 443 098
- EP-A- 0 558 761
- WO-A-87/00781
- GB-A- 2 103 731
- US-A- 4 615 569
- US-A- 4 948 426
- US-A- 5 076 713
- PROSPEKT: 'PM Spritzgusstechnik' 1992 , SINTERMETALLWERK KREBSÖGE , RADEVORMWALD, DE * Spalte 1, Zeile 1 - Spalte 2, Zeile 9 *

## Beschreibung

Die Erfindung betrifft ein Linearwälzlager mit einem über umlaufende Wälzkörper wie Kugeln oder Rollen an einer Führungsschiene abgestützten und längs der Führungsschiene verschiebbaren, als Tragkörper ausgebildeten Bauteil, an dem Laufbahnen der Wälzkörper angeordnet sind, und bei dessen Herstellung ein Kunststoff im Spritzgießverfahren geformt ist.

Aus dem Dokument EP-A-0 558 761 ist ein solches Linearwälzlager mit einem als Tragkörper ausgeführten Bauteil bekannt. Dabei benötigt der Tragkörper sowohl für die Befestigung mit dem Anschlußbauteil als auch für die Lagerung an einer Führungsschiene jeweils eine dünne Metallplatte, nämlich eine Montageplatte und eine Kugellaufbahnplatte. Beide Platten werden von dem Bauteil aus einem spritz- oder gießbaren Werkstoff zusammengehalten, in welchem sie eingebettet sind. Dieser Werkstoff kann beispielsweise ein gespritzter Kunststoff oder eine Aluminium- oder Zinklegierung sein, die im Spritzgußverfahren mit den Platten verbunden wird.

Diese Vorgehensweise hat den Nachteil, daß nicht nur das Einbetten der Platten in den gießfähigen Werkstoff erforderlich ist, sondern daß auch die unterschiedlich gestalteten beiden Platten mit ihren Wälzkörperlaufbahnen und Montagebohrungen für die Spritzgußverbindung hergestellt und vorbereitet werden müssen. Dadurch ergibt sich ein arbeits- und kostenaufwendiges Lager.

Wie sich aus dem Prospekt "PM-Spritzgußtechnik" der Firma Sintermetallwerk Krebsöge GmbH in Radevormwald ergibt, lassen sich kleinere, kompliziert geformte Bauteile aus Stahl nach einem mit "Metal Injection Moulding" (MIM) bezeichneten Spritzgußverfahren ohne spanende Bearbeitung herstellen. Dieses Verfahren vereinigt die Formgebung durch Spritzgießen, wie sie in der Kunststofftechnik üblich ist, mit den hochwertigen Werkstoffeigenschaften der Pulvermetallurgie. Ausgangsmaterial sind sehr feine Metallpulver, deren Korngrößendurchmesser beispielsweise 10 µ betragen kann. Aus Basispulver und Legierungszusätzen entsteht eine Pulvermischung mit der gewünschten chemischen Zusammensetzung. In einem beheizten Kneter wird die Pulvermischung mit Hilfe polymerer organischer Bindemittel (Wachse, Kunststoffe) plastizifiert, anschließend granuliert und auf herkömmlichen Spritzgußmaschinen verarbeitet.

Die spritzgegossenen Formkörper werden dann in einem Ofen einer Wärmebehandlung als Entwachsungsprozess unterzogen. Dabei zerbrechen die Molekülketten des Bindemittels durch thermische oder chemische Zersetzung. Das Bindemittel verdampft. Gleichzeitig findet eine Vorsinterung der metallischen Körper statt, die diesen eine ausreichende Stabilität verleiht. Beim anschließenden Sintern, das im Vakuum oder in einer Schutzgasatmosphäre durchgeführt werden kann, erhalten die Spritzgußteile ihre guten Werkstoffeigenschaften. Die Dichte nimmt dabei stark zu und die Abmessungen können um bis zu 20 % schrumpfen.

Auch aus dem Dokument WO-A-87 00 781 ist es bekannt, kompliziert geformte Bauteile durch Sintern herzustellen. Dort ist erwähnt, daß die geometrische Form der herzustellenden Präzisionsteile praktisch beliebig sein könne, die Anwendung eines solchen Herstellungsverfahrens erfolge hauptsächlich bei Schaufeln oder Rädern des Turbo-Maschinenbaus. Über die Anwendung eines solchen, eine Sinterung enthaltenden Verfahrens bei Wälzlagern ist diesem Dokument jedoch kein Hinweis zu entnehmen.

Der Erfindung liegt die Aufgabe zugrunde, ein Linearwälzlager zu schaffen, bei welchem die Anzahl der erforderlichen Arbeitsgänge verringert ist. Das Lager soll einen solchen konstruktiven Aufbau erhalten, daß sich die Werkzeug- oder Maschinenkosten und zusätzliche Teile- und Montagekosten der Herstellung reduzieren lassen.

Diese Aufgabe wird erfindungsgemäß durch die Merkmale der Kennzeichnende Teile des Anspruchs 1 gelöst.

Die Erfindung besteht also darin, bei der Herstellung von lanfbahnen einer linearwätzlagers, welches kompliziert geformt sein kann, das mit "Metal Injection Moulding" (MIM) bezeichnete Verfahren anzuwenden. Dieses Verfahren erlaubt es, in Spritzgußmaschinen für Kunststoff sehr genaue Metallteile kostengünstig herzustellen. Obwohl zunächst Bedenken dagegen bestanden, Wälzkörperlaufbahnen aus gesinterten Werkstoffen herzustellen, hat sich erwiesen, daß erfindungsgemäß hergestellte Bauteile als tragende Lagerteile einsetzbar sind. Nach dem Sintervorgang liegen Metallteile vor, welche wie herkömmlich hergestellte Metallteile bearbeitet werden können.

Üblicherweise werden Lagerbauteile wie Tragkörper für Linearlager aus gezogenen Profilen oder aus Vollmaterial hergestellt, was wirtschaftlich nur bei hohen Stückzahlen möglich ist. Stellt man diese Bauteile erfindungsgemäß spritztechnisch her, so kann man nicht nur auf hohe Stückzahlen verzichten, sondern diese Bauteile können auch infolge der möglichen engen Toleranzen mit einem minimalen Schleifaufmaß hergestellt werden. Ein weiterer Kostenvorteil ergibt sich daraus, daß beispielsweise Befestigungsgewinde bei dem Spritzvorgang mit hergestellt werden können. Auch Schmierbohrungen und Bohrungen zur Kugelrückführung bei Wälzkörperumlaufsystemen werden in einem Arbeitsgang mit hergestellt. Durch das Integrieren von Umlenkteilen, Haltenasen und Kugelrückhaltestegen, die beim Spritzen alle mit hergestellt werden können, lassen sich die Werkzeug-, Teile- und Montagekosten erheblich reduzieren. Die Montage wird vereinfacht, weil weniger Teile zu montieren sind und die Teile nicht mehr angeschraubt, sondern nur noch gesteckt zu werden brauchen. Durch die erfindungsgemäßen metallischen Umlenk- und Käfigteile lassen sich die Anwendungsgrenzen, die derzeit häufig durch die Verhältnisse bei Kunststoffteilen festgelegt sind, erheblich erweitern. Mit den erfindungsgemäßen Lagern können höhere Geschwindigkeiten, Temperaturen und Beschleunigungen erreicht werden.

Bei einem erfindungsgemäßen Tragkörper für ein Linearwälzlager können die Laufbahnen für die Wälzkörper von einer zentralen Ausnehmung her zugänglich angeformt sein, so daß sich hier die tragenden Wälzkörper einerseits unmittelbar an dem Tragkörper, also ohne Verwendung einer zusätzlichen Laufbahnplatte, und andererseits an der Führungsschiene abstützen können, für die die zentrale Ausnehmung des Tragkörpers vorgesehen ist. In entsprechender Weise können in dem Tragkörper zu den Laufbahnen parallele Rücklaufkanäle für die rücklaufenden Wälzkörper eingeformt sein. Es ist auch möglich, an dem Tragkörper an seiner von der zentralen Ausnehmung abgewandten Außenseite eine Freistellung auszubilden, die die exakte Anlage der Anschlußkonstruktion an dem Tragkörper begünstigt, da die Anschlußkonstruktion zu beiden Seiten der Freistellung an definierten Anlageflächen des Tragkörpers anliegt.

Wenn als Wälzkörper Kugeln verwendet werden, kann jeder Rücklaufkanal in der Form einer durchgehenden Bohrung des Tragkörpers ausgebildet sein. Zur leichten Montage durch Einklipsen können an den in die Verschiebungsrichtungen weisenden Stirnseiten des Tragkörpers Befestigungsvorsprünge mit Haltenasen für Umlenkkörper angeformt sein, wobei die Haltenasen durch die Anbringung von Ausnehmungen in der Form von Hinterschneidungen gebildet sind. Dabei können die Umlenkkörper, die üblicherweise aus Kunststoff hergestellt sind, für hohe Temperaturen, Geschwindigkeiten und Beschleunigungen in derselben Weise hergestellt sein wie der Tragkörper.

Der Tragkörper kann mit zwei Wälzkörperumlaufschuhen und einem Verbindungssteg, welche gemeinsam die zentrale Ausnehmung begrenzen, entweder als einstückiges Bauteil ausgeführt sein, oder er kann aus einem einstückigen Verbindungssteg und zwei daran lösbar befestigten Wälzkörperumlaufschuhen bestehen. Es lassen sich also nicht nur vollständige Tragkörper, sondern auch einzelne Tragkörperbauteile erfindungsgemäß aussbilden.

Ausführungsbeispiele der Erfindung sind in der Zeichnung dargestellt und werden im folgenden näher beschrieben. Es zeigen
- Figur 1: eine perspektivische Ansicht eines einstückigen Tragkörpers;
- Figur 2: einen Querschnitt durch den Tragkörper;
- Figur 3: eine vergrößerte Darstellung des Verbindungsbereichs eines Tragkörpers und eines daran angesetzten und durch Einklipsen befestigten Umlenkkörpers;
- Figur 4: eine stirnseitige Ansicht eines aus mehreren Teilen zusammengebauten Tragkörpers;
- Figur 5: einen Querschnitt durch einen Wälzkörperumlaufschuh des Tragkörpers nach Figur 4;
- Figur 6: eine stirnseitige Ansicht eines Wälzkörperumlaufschuhs;
- Figur 7: einen Längsschnitt durch den Wälzkörperumlaufschuh gemäß Linie VII-VII der Figur 6.

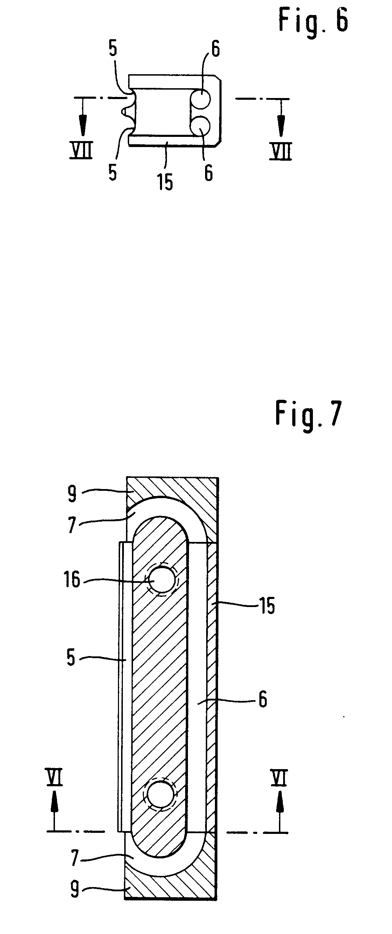

Ein Tragkörper 1 für ein erfindungsgemäßes Linearwälzlager besteht aus einem einstückigen U-förmigen Körper, der für die Umfassung einer Führungsschiene eine zentrale Ausnehmung 2 aufweist. Senkrechte Gewindebohrungen 3, die zu beiden Seiten einer Freistellung 4 von der Oberseite des Tragkörpers 1 ausgehen, ermöglichen die Befestigung einer Anschlußkonstruktion, beispielsweise eines Maschinenbauteils, welches die geradlinige hin- und hergehende Bewegung längs der Führungsschiene ausführen soll. Der Tragkörper 1 wird mit Wälzkörperumläufen an der Führungsschiene abgestützt. Er weist innerhalb der Ausnehmung 2 geradlinige Laufbahnen 5 für die tragenden Wälzkörper auf. Für jede Laufbahn 5 enthält der Tragkörper 1 einen parallelen Rücklaufkanal 6. Die Laufbahn 5 und der Rücklaufkanal 6 sind jeweils durch Umlenkkanäle 7 (Figur 7) miteinander verbunden. Jeder Umlenkkanal 7 ist in einem an einer Stirnseite 8 des Tragkörpers 1 anliegenden Umlenkkörper 9 angeordnet.

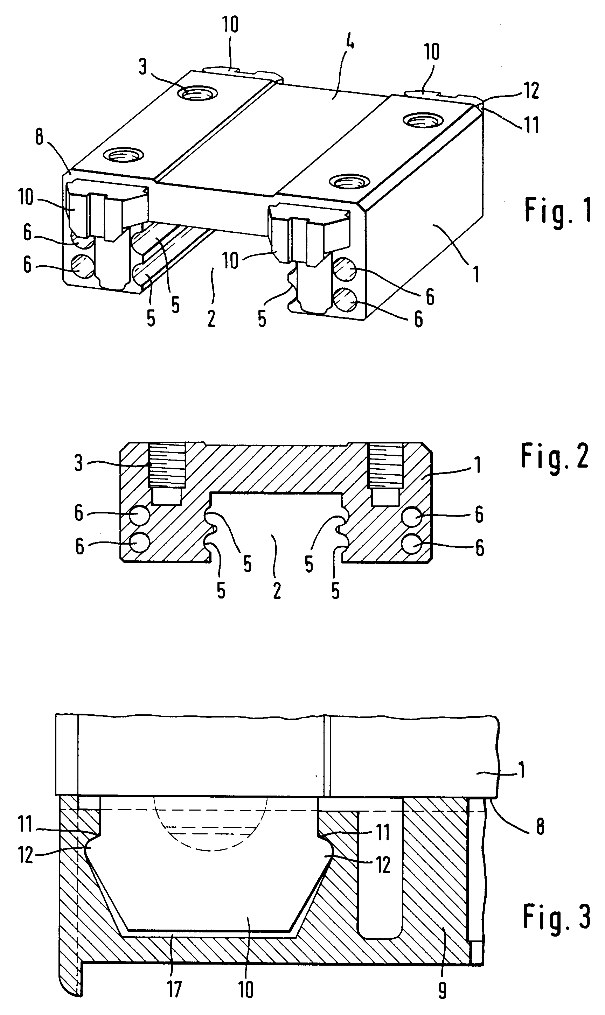

Für die einfache Befestigung des Umlenkkörpers 9 an dem Tragkörper 1 (Figur 3) sind mehrere von den Stirnseiten 8 des Tragkörpers 1 abstehende Befestigungsvorsprünge 10 einstückig mit dem Tragkörper 1 ausgebildet. Diese weisen senkrecht verlaufende Hinterschneidungen 11 auf, so daß sich an dem Befestigungsvorsprung 10 jeweils zwei Haltenasen 12 ergeben. Der Umlenkkörper 9 weist Ausnehmungen 17 auf, die der Form und der Lage der Befestigungsvorsprünge 10 entsprechen, er kann daher in einfacher Weise auf die Befestigungsvorsprünge 10 aufgeklipst werden, wodurch die Wälzkörperumläufe des Tragkörpers 1 hergestellt sind.

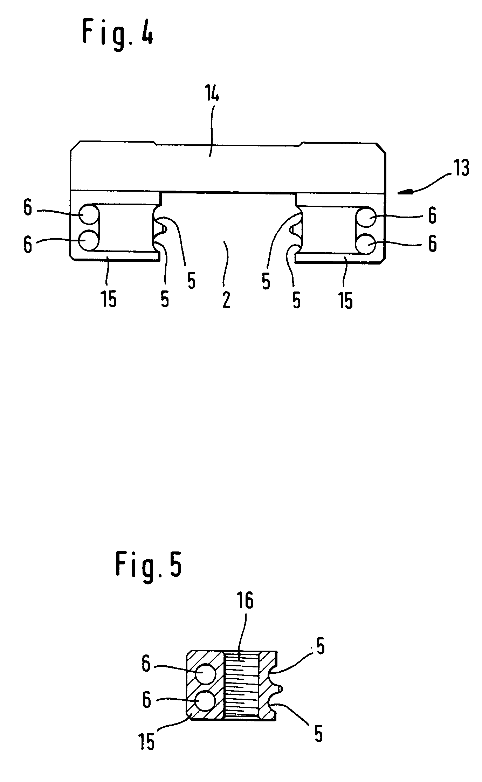

Der Tragkörper 13 gemäß Figur 4 der Zeichnung ist grundsätzlich ebenso aufgebaut, jedoch nicht einstückig ausgeführt. An einem die Führungsschiene abdeckenden Verbindungssteg 14 des Tragkörpers 13 sind an beiden Seiten Wälzkörperumlaufschuhe 15 angeschraubt, also lösbar befestigt. Zu diesem Zweck weisen die Wälzkörperumlaufschuhe 15 senkrechte Gewindebohrungen 16 auf.

### Bezugszahlenliste

- 1: Tragkörper
- 2: zentrale Ausnehmung
- 3: Gewindebohrung
- 4: Freistellung
- 5: Laufbahn
- 6: Rücklaufkanal
- 7: Umlenkkanal
- 8: Stirnseite
- 9: Umlenkkörper
- 10: Befestigungsvorsprung
- 11: Hinterschneidung
- 12: Haltenase
- 13: Tragkörper
- 14: Verbindungssteg
- 15: Wälzkörperumlaufschuh
- 16: Gewindebohrung
- 17: Ausnehmung

## Patentansprüche

1. Linearwälzlager mit einem über umlaufende Wälzkörper wie Kulgen oder Rollen an einer Führungsschiene abgestützten und längs der Führungsschiene verschiebbaren, als Tragkörper (1, 13) ausgebildeten Bauteil, an dem Laufbahnen (5) der Wälzkörper angeordnet sind, und bei dessen Herstellung ein Kunststoff im Spritzgießverfahren geformt ist, **dadurch gekennzeichnet**, daß bei der Herstellung des Bauteils durch Spritzgießen die Laufbahnen angeformt sind, wobei ein Gemisch aus einem Metallpulver und einem Kunststoffgranulat verwendet ist und daß die Kunststoffkomponente nach dem Spritzvorgang durch eine Wärmebehandlung oder eine chemische Behandlung als Vorsinterung aus dem Bauteil entfernt und dieses anschließend durch Glühen gesintert wird.

2. Wälzlager nach Anspruch 1, **dadurch gekennzeichnet**, daß der gesamte Tragkörper (1, 13) als im Spritzgießverfahren hergestelltes, die Laufbahnen (5) aufweisendes Bauteil ausgebildet ist.

3. Wälzlager nach Anspruch 2, **dadurch gekennzeichnet**, daß an dem Tragkörper (1, 13) die Laufbahnen (5) für die tragenden Wälzkörper von einer zentralen Ausnehmung (2) her zugänglich angeformt sind.

4. Wälzlager nach Anspruch 3, **dadurch gekennzeichnet**, daß in dem Tragkörper (1, 13) zu den Laufbahnen (5) parallele Rücklaufkanäle (6) für die rücklaufenden Wälzkörper eingeformt sind.

5. Wälzlager nach Anspruch 4, **dadurch gekennzeichnet**, daß jeder Rücklaufkanal (6) für Kugeln als Wälzkörper in der Form einer Bohrung ausgebildet ist.

6. Wälzlager nach Anspruch 2, **dadurch gekennzeichnet**, daß an dem Tragkörper (1, 13) an seiner von der zentralen Ausnehmung (2) abgewandten Außenseite eine Freistellung (4) ausgebildet ist.

7. Wälzlager nach Anspruch 2, **dadurch gekennzeichnet**, daß an den in die Verschiebungsrichtungen weisenden Stirnseiten (8) des Tragkörpers (1, 13) Befestigungsvorsprünge (10) mit durch Ausnehmungen in der Form von Hinterschneidungen (11) gebildeten Haltenasen (12) für Umlenkkörper (9) angeformt sind.

8. Wälzlager nach Anspruch 7, **dadurch gekennzeichnet**, daß die Umlenkkörper (9) in derselben Weise hergestellt sind wie der Tragkörper (1, 13).

9. Wälzlager nach Anspruch 2, **dadurch gekennzeichnet**, daß der Tragkörper (1, 13) aus einem Verbindungssteg (14) und zwei Wälzkörperumlaufschuhen (15) besteht, welche die zentrale Ausnehmung (2) begrenzen und an dem Verbindungssteg (14) lösbar befestigt oder mit diesem als einstückiges Bauteil ausgeführt sind.

## Claims

1. Linear rolling bearing comprising a component configured as a carrier body (1, 13) which is supported and mounted for sliding on a guide rail by rolling elements such as balls or rollers, raceways (5) of the rolling elements being arranged on the carrier body (1, 13) for the manufacturing of which a plastics material is formed by injection moulding, **characterised in that** the raceways are formed on the component during its manufacturing by injection moulding for which a mixture of a metal powder and a plastic granulate is used and, after the injection operation, the plastic constituent is removed from the component by a heat treatment or by a chemical treatment as pre-sintering, following which, the component is sintered by annealing.

2. Rolling bearing according to Claim 1, **characterised in that** the entire carrier body (1, 13) is configured as a component made by injection moulding and comprising the raceways (5).

3. Rolling bearing according to Claim 2, **characterised in that** the raceways (5) for the load-carrying rolling elements are formed on the carrier body (1, 13) so as to be accessible from a central recess (2).

4. Rolling bearing according to Claim 3, **characterised in that** return channels (6) for the returning rolling elements are formed parallel to the raceways (5) in the carrier body (1, 13).

5. Rolling bearing according to Claim 4, **characterised in that** every return channel (6) for rolling elements in the form of balls is configured as a bore.

6. Rolling bearing according to Claim 2, **characterised in that** a recess (4) is formed on an outer surface of the carrier body (1, 13) facing away from the central recess (2).

7. Rolling bearing according to Claim 2, **characterised in that**, on the end faces (8) of the carrier body (1, 13) oriented in the directions of displacement, there are formed fixing projections (10) comprising retention lugs (12) for deflector bodies (9), said retention lugs being formed by recesses in the form of undercuts (11).

8. Rolling bearing according to Claim 7, **characterised in that** the deflector bodies (9) are manufactured in the same manner as the carrier body (1, 13).

9. Rolling bearing according to Claim 2, **characterised in that** the carrier body (1, 13) consists of a connecting web (14) and two rolling element circuit shoes (15) which delimit the central recess (2) and are detachably fixed on the connecting web (14) or are made as a one-piece component with this.

## Revendications

1. Palier linéaire à roulement comprenant un composant configuré en corps de support (1, 13) qui est supporté et monté coulissant sur un rail de guidage par des corps roulants en circulation, tels que des billes ou des rouleaux, des pistes de roulement (5) des corps roulants étant agencées sur ledit composant pour la fabrication duquel une matière plastique est formée par moulage par injection, **caractérisé en ce que** les pistes de roulement sont formées sur le composant pendant sa fabrication par moulage par injection pour lequel on utilise un mélange de poudre métallique et de granulat de matière plastique, et en ce qu'après l'opération d'injection, le constituant de matière plastique est éliminé dans le composant par un traitement thermique ou chimique en tant que processus de préfrittage, et le composant est ensuite fritté par recuit.

2. Palier à roulement selon la revendication 1, **caractérisé en ce que** le corps de support (1, 13) entier est configuré sous la forme d'un composant fabriqué par moulage par injection et comprenant les pistes de roulement (5).

3. Palier à roulement selon la revendication 2, **caractérisé en ce que** les pistes de roulement (5) pour les corps roulants, portants sont formées sur le corps de support (1, 13) de manière à être accessibles à partir d'un évidement central (2).

4. Palier à roulement selon la revendication 3, **caractérisé en ce que** des canaux de retour (6) des corps roulants parallèles aux pistes de roulement (5) sont formés dans le corps de support (1, 13).

5. Palier à roulement selon la revendication 4, **caractérisé en ce que** chaque canal de retour (6) pour des corps roulants en forme de billes est configuré sous la forme d'un alésage.

6. Palier à roulement selon la revendication 2, **caractérisé on ce que** sur la surface externe du corps de support (1, 13) détournée de l'évidement central (2) est formé un dégagement (4).

7. Palier à roulement selon la revendication 2, **caractérisé en ce que** sur les côtés frontaux (8) du corps de support (1, 13) orientés dans les directions de déplacament sont formées des saillies de fixation (10) ayant des talons de retenue (12) pour des corps de renvoi (9), lesdits talons de retenue (12) étant formés par des évidements en forme de contre-dépouilles (11).

8. Palier à roulement selon la revendication 7, **caractérisé en ce que** les corps de renvoi (9) sont fabriqués de la même manière que le corps de support (1, 13).

9. Palier à roulement selon la revendication 2 **caractérisé en ce que** le corps de support (1, 13) comprend une entretoise de liaison (14) et deux patins de circuit 15 de corps roulants qui définissent l'évidement central (2) et qui sont fixés de manière détachable sur l'entretoise de liaison (14) ou sont faits en une seule pièce avec celle-ci.
